# EUROPEAN PATENT APPLICATION

(11) **EP 4 462 886 A1**
(43) Date of publication of application: **13.11.2024**
(21) Application number: 22917867.8
(22) Date of filing: 07.01.2022
(51) Int. Cl.: H04W 52/02

(54) **CHANNEL MONITORING METHOD AND APPARATUS, AND DEVICE AND STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Stöckeler, Ferdinand
(86) International application number: PCT/CN2022/070848
(87) International publication number: WO 2023/130395

(57) **Abstract**

Provided in the present disclosure are a channel monitoring method and apparatus, and a device and a storage medium. The channel monitoring method is executed by a user equipment, and comprises: receiving first downlink control information (DCI); and after a bandwidth part (BWP) is switched, executing physical downlink control channel (PDCCH) monitoring on the basis of one of a first monitoring mode, a second monitoring mode and a third monitoring mode. By using the method, a user equipment may determine, on the basis of different monitoring modes, whether to execute PDCCH monitoring on the basis of a PAD received before a BWP is switched.

## Description

### TECHNICAL FIELD

The disclosure relates to the field of wireless communication technologies, and more particularly to a method and an apparatus for channel monitoring, a device and a storage medium.

### BACKGROUND

In the R17 power saving project, a physical downlink control channel (PDCCH) monitoring adaptation solution is proposed, which adopts a method of scheduling one bit field in downlink control information (DCI) to indicate a PDCCH monitoring adaptation behavior.

A user equipment (UE) may also receive DCI indicating bandwidth part (BWP) switching. The DCI indicating the BWP switching may be the same as or different from the DCI indicating the PDCCH monitoring adaptation behavior.

### SUMMARY

For this, the present disclosure discloses a method and an apparatus for channel monitoring, a device and a storage medium.

According to a first aspect of embodiments of the disclosure, there is provided a method for channel monitoring, performed by a user equipment. The method includes:
receiving first downlink control information (DCI); and
after bandwidth part (BWP) switching, performing physical downlink control channel (PDCCH) monitoring based on one of a first monitoring mode, a second monitoring mode and a third monitoring mode;
in which the first DCI includes information indicating a PDCCH monitoring adaptation behavior, and is received by the user equipment before the BWP switching.

In an implementation, performing the PDCCH monitoring based on the first monitoring mode includes:
ignoring the PDCCH monitoring adaptation behavior indicated by the first DCI.

In an implementation, performing the PDCCH monitoring based on the first monitoring mode further includes:
stopping operation of a search space set group switching timer and/or a PDCCH skipping timer in response to presence of the search space set group switching timer and/or the PDCCH skipping timer in operation and associated to a BWP before the BWP switching.

In an implementation, performing the PDCCH monitoring based on the first monitoring mode includes:
in response to a BWP after the BWP switching being configured with a search space set group, monitoring a default search space set group, before receiving a second DCI; or
in response to the BWP after the BWP switching being configured with no search space set group, monitoring a search space configured on the BWP after the BWP switching, before receiving the second DCI;
in which the second DCI includes information indicating the PDCCH monitoring adaptation behavior, and is received by the user equipment after the BWP switching.

In an implementation, the default search space set group is specified by a communication protocol.

In an implementation, performing the PDCCH monitoring based on the second monitoring mode includes:
in response to a number of PDCCH skipping durations configured by the BWP before the BWP switching being the same as a number of PDCCH skipping durations configured by the BWP after the BWP switching, and a number of search space sets configured by the BWP before the BWP switching being the same as a number of search space sets configured by the BWP after the BWP switching, performing the PDCCH monitoring adaptation behavior indicated by the first DCI.

In an implementation, performing the PDCCH monitoring based on the second monitoring mode further includes:
continuing operation of a search space set group switching timer and/or a PDCCH skipping timer on the BWP after the BWP switching in response to presence of the search space set group switching timer and/or the PDCCH skipping timer in operation and associated to a BWP before the BWP switching.

In an implementation, performing the PDCCH monitoring based on the second monitoring mode includes:
in response to a number of PDCCH skipping durations configured by the BWP before the BWP switching being different from a number of PDCCH skipping durations configured by the BWP after the BWP switching, and/or a number of search space sets configured by the BWP before the BWP switching being different from a number of search space sets configured by the BWP after the BWP switching, performing the following actions:
ignoring the PDCCH monitoring adaptation behavior indicated by the first DCI;
in response to a BWP after the BWP switching being configured with a search space set group, monitoring a default search space set group, before receiving a second DCI; or
in response to the BWP after the BWP switching being configured with no search space set group, monitoring a search space configured on the BWP after the BWP switching, before receiving the second DCI;
in which the second DCI includes information indicating the PDCCH monitoring adaptation behavior, and is received by the user equipment after the BWP switching.

In an implementation, performing the PDCCH monitoring based on the second monitoring mode further includes:
stopping operation of a search space set group switching timer and/or a PDCCH skipping timer in response to presence of the search space set group switching timer and/or the PDCCH skipping timer in operation and associated to the BWP before the BWP switching.

In an implementation, performing the PDCCH monitoring based on the third monitoring mode includes:
performing the PDCCH monitoring adaptation behavior indicated by the first DCI on a BWP after the BWP switching.

In an implementation, performing the PDCCH monitoring based on the third monitoring mode further includes:
continuing operation of a search space set group switching timer and/or a PDCCH skipping timer on the BWP after the BWP switching in response to presence of the search space set group switching timer and/or the PDCCH skipping timer in operation.

In an implementation, performing the PDCCH monitoring based on one of the first monitoring mode, the second monitoring mode and the third monitoring mode includes:
determining a PDCCH monitoring mode based on receiving time points or effective time points of the first DCI and a third DCI, and performing the PDCCH monitoring;
in which, the PDCCH monitoring mode is one of the first monitoring mode, the second monitoring mode and the third monitoring mode;
the third DCI includes information indicating the BWP switching.

In an implementation, determining the PDCCH monitoring mode based on the receiving time points of the first DCI and the third DCI includes:
determining the PDCCH monitoring mode as the first monitoring mode or the second monitoring mode in response to the receiving time point of the first DCI preceding the receiving time point of the third DCI.

In an implementation, determining the PDCCH monitoring mode based on the receiving time points of the first DCI and the third DCI includes:
determining the PDCCH monitoring mode as one of the first monitoring mode, the second monitoring mode and the third monitoring mode in response to the receiving time point of the first DCI and the receiving time point of the third DCI being in a same PDCCH monitoring occasion, and the first DCI being different from the third DCI.

In an implementation, determining the PDCCH monitoring mode based on the receiving time points of the first DCI and the third DCI includes:
determining the PDCCH monitoring mode as the third monitoring mode in response to the receiving time point of the first DCI and the receiving time point of the third DCI being in a same PDCCH monitoring occasion, and the first DCI being the same as the third DCI.

In an implementation, determining the PDCCH monitoring mode based on the receiving time points of the first DCI and the third DCI includes:
determining the PDCCH monitoring mode as the first monitoring mode or the second monitoring mode in response to the receiving time point of the first DCI and the receiving time point of the third DCI being in a same PDCCH monitoring occasion, and the first DCI being the same as the third DCI.

In an implementation, determining the PDCCH monitoring mode based on the effective time points of the first DCI and the third DCI includes:
determining the PDCCH monitoring mode as the first monitoring mode or the second monitoring mode in response to the effective time point of the first DCI preceding the effective time point of the third DCI.

In an implementation, determining the PDCCH monitoring mode based on the effective time points of the first DCI and the third DCI includes:
determining the PDCCH monitoring mode as one of the first monitoring mode, the second monitoring mode and the third monitoring mode in response to the effective time point of the first DCI being the same as the effective time point of the third DCI.

In an implementation, determining the PDCCH monitoring mode based on the effective time points of the first DCI and the third DCI includes:
determining the PDCCH monitoring mode as one of the first monitoring mode, the second monitoring mode and the third monitoring mode in response to the effective time point of the first DCI being after the effective time point of the third DCI.

In an implementation, the effective time point of the third DCI is a time point after a first offset following an end of a slot where the third DCI is located, or a time point after a second offset following an end of PDCCH symbols for transmitting the third DCI;
in which the first offset is greater than or equal to a BWP switching delay specified in a communication protocol, and the second offset is a sum of remaining symbols in the slot where the third DCI is located, after removing the PDCCH symbols for transmitting the third DCI, and the first offset.

In an implementation, the effective time point of the first DCI is specified by a communication protocol or by a high-level configuration.

In an implementation, performing the PDCCH monitoring based on one of the first monitoring mode, the second monitoring mode and the third monitoring mode includes:
determining a PDCCH monitoring mode based on the PDCCH monitoring adaptation behavior indicated by the first DCI, and performing the PDCCH monitoring;
in which, the PDCCH monitoring mode is one of the first monitoring mode, the second monitoring mode and the third monitoring mode.

In an implementation, determining the PDCCH monitoring mode based on the PDCCH monitoring adaptation behavior indicated by the first DCI includes:
determining the PDCCH monitoring mode as the third monitoring mode in response to the PDCCH monitoring adaptation behavior indicated by the first DCI being PDCCH skipping.

In an implementation, the method further includes:
stopping the PDCCH monitoring on a BWP after the BWP switching in response to the BWP after the BWP switching being a sleeping BWP.

According to a second aspect of embodiments of the disclosure, there is provided an apparatus for channel monitoring, applied to a user equipment. The apparatus includes:
a receiving module configured to receive first downlink control information (DCI); and
a processing module, configured to, after bandwidth part (BWP) switching, perform physical downlink control channel (PDCCH) monitoring based on one of a first monitoring mode, a second monitoring mode and a third monitoring mode;
in which the first DCI includes information indicating a PDCCH monitoring adaptation behavior, and is received by the user equipment before the BWP switching.

According to a third aspect of embodiments of the disclosure, there is provided a mobile terminal. The mobile terminal includes:
a processor;
a memory for storing processor-executable instructions;
in which, the processor is configured to execute the executable instructions in the memory to implement steps of the above method for channel monitoring.

According to a fourth aspect of embodiments of the disclosure, there is provided non-transitory computer-readable storage medium with executable instructions stored thereon, in which, when the executable instructions are executed by a processor, steps of the above method for channel monitoring are implemented.

The technical solution provided by embodiments of the disclosure may include the following beneficial effects.

With the method of the present disclosure, the user equipment may determine whether to perform the PDCCH monitoring based on the PAD (PDCCH adaptation DCI) received before the BWP switching based on different monitoring modes, thereby solving a problem of which method the user equipment uses to monitor the PDCCH after the BWP switching.

It is to be understood that both the foregoing general description and the following detailed description are exemplary and explanatory only, and are not restrictive of the present disclosure.

### BRIEF DESCRIPTION OF THE DRAWINGS

The accompanying drawings described here are used to provide a further understanding of embodiments of the present disclosure, and constitute a part of the present disclosure. The illustrative embodiments of embodiments of the present disclosure and their descriptions are used to explain embodiments of the present disclosure, and do not constitute limitations to embodiments of the present disclosure. undue limitation, in which:
The accompanying drawings, which are incorporated in and constitute a part of this specification, illustrate embodiments consistent with the disclosure and, together with the description, serve to explain the principles of the disclosure.
FIG. 1 is a flow chart illustrating a method for channel monitoring according to an exemplary embodiment.
FIG. 2 is a flow chart illustrating a method for channel monitoring according to an exemplary embodiment.
FIG. 3 is a flow chart illustrating a method for channel monitoring according to an exemplary embodiment.
FIG. 4 is a flow chart illustrating a method for channel monitoring according to an exemplary embodiment.
FIG. 5 is a flow chart illustrating a method for channel monitoring according to an exemplary embodiment.
FIG. 6 is a flow chart illustrating a method for channel monitoring according to an exemplary embodiment.
FIG. 7 is a flow chart illustrating a method for channel monitoring according to an exemplary embodiment.
FIG. 8 is a flow chart illustrating a method for channel monitoring according to an exemplary embodiment.
FIG. 9 is a flow chart illustrating a method for channel monitoring according to an exemplary embodiment.
FIG. 10 is a flow chart illustrating a method for channel monitoring according to an exemplary embodiment.
FIG. 11 is a flow chart illustrating a method for channel monitoring according to an exemplary embodiment.
FIG. 12 is a flow chart illustrating a method for channel monitoring according to an exemplary embodiment.
FIG. 13 is a block diagram illustrating an apparatus for channel monitoring according to an exemplary embodiment.
FIG. 14 is a block diagram illustrating a structure of an apparatus for channel monitoring according to an exemplary embodiment.

### DETAILED DESCRIPTION

Embodiments of the present disclosure will be further described here in combination with the accompanying drawings and specific implementations.

Exemplary embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following exemplary embodiments do not represent all implementations consistent with the present disclosure. Instead, they are merely examples of apparatuses and methods consistent with some aspects of the disclosure as described in the appended claims.

It should be noted that an embodiment of the present disclosure may include a plurality of steps. For convenience of description, these steps are numbered; however, these numbers do not limit execution slots and an execution order between the steps. These steps can be implemented in any order, which is not limited by embodiments of the present disclosure.

DCI including information indicating a PDCCH monitoring adaptation behavior may be represented as PDCCH adaptation DCI (PAD), and DCI including information indicating BWP switching may be represented as BWP switching DCI (BSD).

After a user equipment receives the PAD, the user equipment may adopt one of the following behaviors:
Behavior 1 (Beh 1): PDCCH skipping being not activated;
Behavior 1A (Beh 1A): stopping PDCCH monitoring (that is, PDCCH skipping) within X duration, in which a value of X may be dynamically indicated in the DCI by a network device;
Behavior 2 (Beh 2): stopping monitoring search spaces in search space set group (SSSG) #1 and SSSG #2 (if configured), and monitoring search spaces in SSSG #0;
Behavior 2A (Beh 2A): stopping monitoring the search spaces in SSSG#0 and SSSG#2 (if configured), and monitoring the search space in SSSG#1.
Behavior 2B (Beh 2B): stopping monitoring the search spaces in SSSG#0 and SSSG#1, and monitoring the search space in SSSG#2 (if configured).

The existing communication protocol specifies that the PAD can only be transmitted before the BSD or in a same monitoring occasion (MO).

Then, it is required to define a PDCCH monitoring behavior in a scenario where the user equipment performs the BWP switching and receives a PDCCH monitoring adaptation indication.

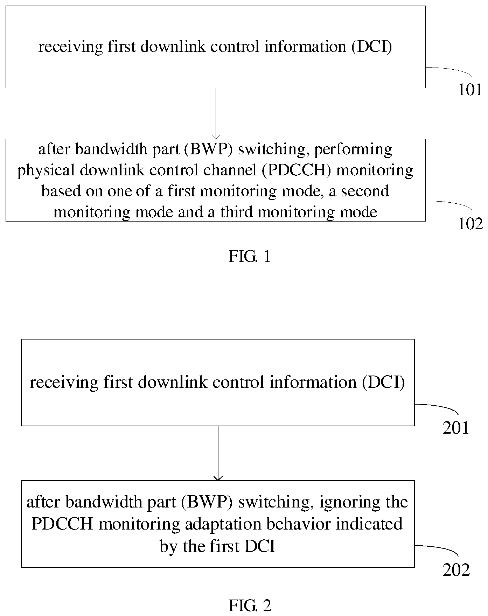

An embodiment of the disclosure provides a method for channel monitoring, performed by a user equipment. The method may be executed independently, or may be executed in combination with any other embodiment of the embodiments of the present disclosure. FIG. 1 is a flow chart illustrating a method for channel monitoring according to an exemplary embodiment. As shown in FIG. 1, the method may include the following steps.

At step 101, first downlink control information (DCI) is received.

At step 102, after bandwidth part (BWP) switching, physical downlink control channel (PDCCH) monitoring is performed based on one of a first monitoring mode, a second monitoring mode and a third monitoring mode;
in which the first DCI includes information indicating a PDCCH monitoring adaptation behavior, and is received by the user equipment before the BWP switching.

In an embodiment, the user equipment receives the PAD before the BWP switching, and performs the PDCCH monitoring based on one of the first monitoring mode, the second monitoring mode and the third monitoring mode after the BWP switching. In an implementation, the BWP switching is BWP switching based on receiving the DCI indicating the BWP switching. In an implementation, the BWP switching is BWP switching based on a timer.

In the above implementation, the user equipment may determine whether to perform the PDCCH monitoring based on the PAD (PDCCH adaptation DCI) received before the BWP switching based on different monitoring modes, thereby solving a problem of which method the user equipment uses to monitor the PDCCH after the BWP switching.

An embodiment of the disclosure provides a method for channel monitoring, performed by a user equipment. The method may be executed independently, or may be executed in combination with any other embodiment of the embodiments of the present disclosure. FIG. 2 is a flow chart illustrating a method for channel monitoring according to an exemplary embodiment. As shown in FIG. 2, the method may include the following steps.

At step 201, first DCI is received.

At step 202, after bandwidth part (BWP) switching, the PDCCH monitoring adaptation behavior indicated by the first DCI is ignored, in which the first DCI includes information indicating the PDCCH monitoring adaptation behavior, and is received by the user equipment before the BWP switching.

In an implementation, the user equipment receives the PAD before the BWP switching, and after the BWP switching, ignores the PAD received before the BWP switching, that is, does not perform the PDCCH monitoring adaptation behavior indicated by the PAD received before the BWP switching.

In an implementation, the user equipment receives the PAD before the BWP switching, and after the BWP switching, ignores the PAD received before the BWP switching, that is, does not perform the PDCCH monitoring adaptation behavior indicated by the PAD received before the BWP switching, and in response to a BWP after the BWP switching being configured with a search space set group, monitors a default search space set group before receiving a PAD after the BWP switching. The default search space set group is specified by a communication protocol, for example, SSSG#0.

In an implementation, the user equipment receives the PAD before the BWP switching, and after the BWP switching, ignores the PAD received before the BWP switching, that is, does not perform the PDCCH monitoring adaptation behavior indicated by the PAD received before the BWP switching, and in response to the BWP after the BWP switching being configured with no search space set group, monitors a search space configured on the BWP after the BWP switching before receiving the PAD after the BWP switching.

The PDCCH monitoring mode adopted by the user equipment in the foregoing implementations is the first monitoring mode.

In the above implementation, when performing the PDCCH monitoring, the user equipment ignores the PAD received before the BWP switching, such that the PDCCH monitoring can be performed based on configuration of the BWP after the BWP switching.

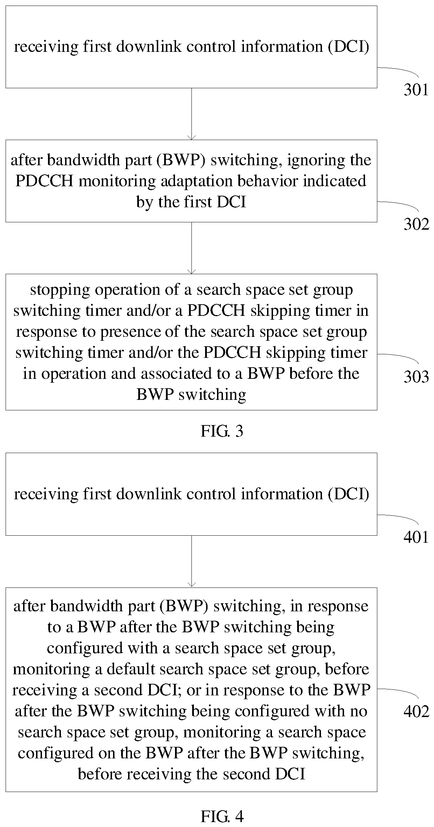

An embodiment of the disclosure provides a method for channel monitoring, performed by a user equipment. The method may be executed independently, or may be executed in combination with any other embodiment of the embodiments of the present disclosure. FIG. 3 is a flow chart illustrating a method for channel monitoring according to an exemplary embodiment. As shown in FIG. 3, the method may include the following steps.

At step 301, first DCI is received.

At step 302, after bandwidth part (BWP) switching, the PDCCH monitoring adaptation behavior indicated by the first DCI is ignored.

At step 303, operation of a search space set group switching timer and/or a PDCCH skipping timer is stopped in response to presence of the search space set group switching timer and/or the PDCCH skipping timer in operation and associated to a BWP before the BWP switching;
in which the first DCI includes information indicating the PDCCH monitoring adaptation behavior, and is received by the user equipment before the BWP switching.

In an implementation, the user equipment receives the PAD before the BWP switching, and after the BWP switching, ignores the PAD received before the BWP switching, that is, does not perform the PDCCH monitoring adaptation behavior indicated by the PAD received before the BWP switching, and stops the operation of the search space set group switching timer and/or the PDCCH skipping timer in a scenario that the search space set group switching timer and/or the PDCCH skipping timer in operation and associated to the BWP before the BWP switching is present.

In an implementation, the user equipment receives the PAD before the BWP switching, and after the BWP switching, ignores the PAD received before the BWP switching, that is, does not perform the PDCCH monitoring adaptation behavior indicated by the PAD received before the BWP switching, and stops the operation of the search space set group switching timer and/or the PDCCH skipping timer in a scenario that the search space set group switching timer and/or the PDCCH skipping timer in operation and associated to the BWP before the BWP switching is present, and in response to a BWP after the BWP switching being configured with a search space set group, monitors a default search space set group before receiving a PAD after the BWP switching. The default search space set group is specified by a communication protocol, for example, SSSG#0.

In an implementation, the user equipment receives the PAD before the BWP switching, and after the BWP switching, ignores the PAD received before the BWP switching, that is, does not perform the PDCCH monitoring adaptation behavior indicated by the PAD received before the BWP switching, and stops the operation of the search space set group switching timer and/or the PDCCH skipping timer in a scenario that the search space set group switching timer and/or the PDCCH skipping timer in operation and associated to the BWP before the BWP switching is present, and in response to the BWP after the BWP switching being configured with no search space set group, monitors a search space configured on the BWP after the BWP switching before receiving the PAD after the BWP switching.

The PDCCH monitoring mode adopted by the user equipment in the foregoing implementations is the first monitoring mode.

In the above implementation, when performing the PDCCH monitoring, the user equipment ignores the PAD received before the BWP switching, such that the PDCCH monitoring can be performed based on configuration of the BWP after the BWP switching.

An embodiment of the disclosure provides a method for channel monitoring, performed by a user equipment. The method may be executed independently, or may be executed in combination with any other embodiment of the embodiments of the present disclosure. FIG. 4 is a flow chart illustrating a method for channel monitoring according to an exemplary embodiment. As shown in FIG. 4, the method may include the following steps.

At step 401, first DCI is received.

At step 402, after bandwidth part (BWP) switching, in response to a BWP after the BWP switching being configured with a search space set group, a default search space set group is monitored before receiving a second DCI; in response to the BWP after the BWP switching being configured with no search space set group, a search space configured on the BWP after the BWP switching monitored before receiving the second DCI.

The first DCI includes information indicating the PDCCH monitoring adaptation behavior, and is received by the user equipment before the BWP switching. The second DCI includes information indicating the PDCCH monitoring adaptation behavior, and is received by the user equipment after the BWP switching.

In an implementation, the user equipment receives the PAD before the BWP switching, and after the BWP switching, in response to a BWP after the BWP switching being configured with a search space set group, monitors a default search space set group before receiving a PAD after the BWP switching. The default search space set group is specified by a communication protocol, for example, SSSG#0.

In an implementation, the user equipment receives the PAD before the BWP switching, and after the BWP switching, in response to the BWP after the BWP switching being configured with no search space set group, monitors a search space configured on the BWP after the BWP switching before receiving the PAD after the BWP switching.

The PDCCH monitoring mode adopted by the user equipment in the foregoing implementations is the first monitoring mode.

In the above implementation, when performing the PDCCH monitoring, the user equipment adopts different modes of PDCCH monitoring based on whether the search space set group is configured on the BWP after the BWP switching.

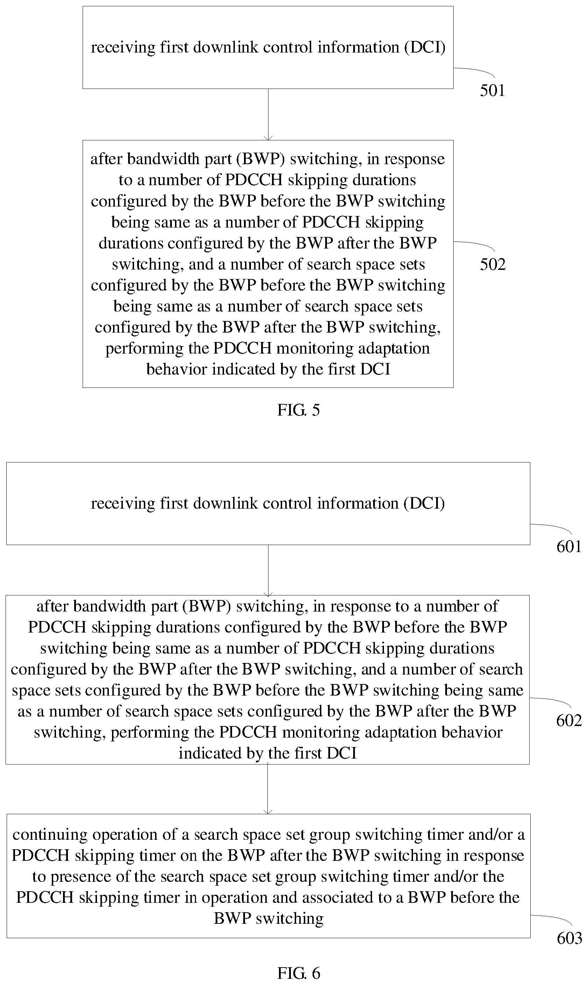

An embodiment of the disclosure provides a method for channel monitoring, performed by a user equipment. The method may be executed independently, or may be executed in combination with any other embodiment of the embodiments of the present disclosure. FIG. 5 is a flow chart illustrating a method for channel monitoring according to an exemplary embodiment. As shown in FIG. 5, the method may include the following steps.

At step 501, first DCI is received.

At step 502, after bandwidth part (BWP) switching, in response to a number of PDCCH skipping durations configured by the BWP before the BWP switching being the same as a number of PDCCH skipping durations configured by the BWP after the BWP switching, and a number of search space sets configured by the BWP before the BWP switching being the same as a number of search space sets configured by the BWP after the BWP switching, the PDCCH monitoring adaptation behavior indicated by the first DCI is performed.

The first DCI includes information indicating the PDCCH monitoring adaptation behavior, and is received by the user equipment before the BWP switching.

In an implementation, the user equipment receives the PAD before the BWP switching, and after the BWP switching, in response to the number of the PDCCH skipping durations configured by the BWP before the BWP switching being the same as the number of the PDCCH skipping durations configured by the BWP after the BWP switching, and the number of the search space set groups configured by the BWP before the BWP switching being the same as the number of the search space set groups configured by the BWP after the BWP switching, continues to perform the PDCCH monitoring adaptation behavior indicated by a PAD received before the BWP switching is.

The PDCCH monitoring mode adopted by the user equipment in the foregoing implementation is the second monitoring mode.

In the above implementation, in a scenario where the number of the PDCCH skipping durations configured by the BWP before the BWP switching is the same as the number of the PDCCH skipping durations configured by the BWP after the BWP switching, and the number of the search space set groups configured by the BWP before the BWP switching is the same as the number of the search space set groups configured by the BWP after the BWP switching, the user equipment continues to perform the PDCCH monitoring based on the PAD received before the BWP switching. In this way, in a scenario where configurations before and after the BWP switching are the same, performing the PDCCH monitoring adaptation behavior before the BWP switching can be continued.

An embodiment of the disclosure provides a method for channel monitoring, performed by a user equipment. The method may be executed independently, or may be executed in combination with any other embodiment of the embodiments of the present disclosure. FIG. 6 is a flow chart illustrating a method for channel monitoring according to an exemplary embodiment. As shown in FIG. 6, the method may include the following steps.

At step 601, first DCI is received.

At step 602, after bandwidth part (BWP) switching, in response to a number of PDCCH skipping durations configured by the BWP before the BWP switching being the same as a number of PDCCH skipping durations configured by the BWP after the BWP switching, and a number of search space sets configured by the BWP before the BWP switching being the same as a number of search space sets configured by the BWP after the BWP switching, the PDCCH monitoring adaptation behavior indicated by the first DCI is performed.

At step 603, operation of a search space set group switching timer and/or a PDCCH skipping timer on the BWP after the BWP switching is continued in response to presence of the search space set group switching timer and/or the PDCCH skipping timer in operation and associated to a BWP before the BWP switching.

The first DCI includes information indicating the PDCCH monitoring adaptation behavior, and is received by the user equipment before the BWP switching.

In an implementation, the user equipment receives the PAD before the BWP switching, and after the BWP switching, in response to the number of the PDCCH skipping durations configured by the BWP before the BWP switching being the same as the number of the PDCCH skipping durations configured by the BWP after the BWP switching, and the number of the search space set groups configured by the BWP before the BWP switching being the same as the number of the search space set groups configured by the BWP after the BWP switching, continues to perform the PDCCH monitoring adaptation behavior indicated by a PAD received before the BWP switching, and continues the operation of the search space set group switching timer and/or the PDCCH skipping timer on the BWP after the BWP switching in response to the presence of the search space set group switching timer and/or the PDCCH skipping timer in operation and associated to the BWP before the BWP switching.

The PDCCH monitoring mode adopted by the user equipment in the foregoing implementation is the second monitoring mode.

In the above implementation, in a scenario where the number of the PDCCH skipping durations configured by the BWP before the BWP switching is the same as the number of the PDCCH skipping durations configured by the BWP after the BWP switching, and the number of the search space set groups configured by the BWP before the BWP switching is the same as the number of the search space set groups configured by the BWP after the BWP switching, the user equipment continues to perform the PDCCH monitoring based on the PAD received before the BWP switching. In this way, in a scenario where configurations before and after the BWP switching are the same, performing the PDCCH monitoring adaptation behavior before the BWP switching can be continued, without interrupting the operation of the search space set group switching timer and/or the PDCCH skipping timer.

An embodiment of the disclosure provides a method for channel monitoring, performed by a user equipment. The method may be executed independently, or may be executed in combination with any other embodiment of the embodiments of the present disclosure. The method includes:
receiving a first DCI; and
after bandwidth part (BWP) switching, in response to a number of PDCCH skipping durations configured by the BWP before the BWP switching being different from a number of PDCCH skipping durations configured by the BWP after the BWP switching, and/or a number of search space sets configured by the BWP before the BWP switching being different from a number of search space sets configured by the BWP after the BWP switching, performing the following actions:
   ignoring the PDCCH monitoring adaptation behavior indicated by the first DCI;
   in response to a BWP after the BWP switching being configured with a search space set group, monitoring a default search space set group, before receiving a second DCI; or
   in response to the BWP after the BWP switching being configured with no search space set group, monitoring a search space configured on the BWP after the BWP switching, before receiving the second DCI;
   in which the first DCI includes information indicating the PDCCH monitoring adaptation behavior, and is received by the user equipment before the BWP switching, the second DCI includes information indicating the PDCCH monitoring adaptation behavior, and is received by the user equipment after the BWP switching.

In an implementation, the user equipment receives the PAD before the BWP switching, and after the BWP switching, in response to the number of the PDCCH skipping durations configured by the BWP before the BWP switching being different from the number of the PDCCH skipping durations configured by the BWP after the BWP switching, or the number of the search space set groups configured by the BWP before the BWP switching being different from the number of the search space set groups configured by the BWP after the BWP switching, or both the number of the PDCCH skipping durations and the number of the search space set groups configured by the BWP before the BWP switching being different from both the number of the PDCCH skipping durations and the number of the search space set groups configured by the BWP after the BWP switching, the following actions are performed: ignoring the PAD received before the BWP switching, that is, not performing the PDCCH monitoring adaptation behavior indicated by the PAD received before the BWP switching; or, in response to the BWP after the BWP switching being configured with the search space set group, monitoring the default search space set group, before receiving a PAD after the BWP switching.

In an implementation, the user equipment receives the PAD before the BWP switching, and after the BWP switching, in response to the number of the PDCCH skipping durations configured by the BWP before the BWP switching being different from the number of the PDCCH skipping durations configured by the BWP after the BWP switching, or the number of the search space set groups configured by the BWP before the BWP switching being different from the number of the search space set groups configured by the BWP after the BWP switching, or both the number of the PDCCH skipping durations and the number of the search space set groups configured by the BWP before the BWP switching being different from both the number of the PDCCH skipping durations and the number of the search space set groups configured by the BWP after the BWP switching, the following actions are performed: ignoring the PAD received before the BWP switching, that is, not performing the PDCCH monitoring adaptation behavior indicated by the PAD received before the BWP switching; or, in response to the BWP after the BWP switching being configured with no search space set group, monitoring the search space configured on the BWP after the BWP switching, before receiving a PAD after the BWP switching.

The PDCCH monitoring mode adopted by the user equipment in the foregoing implementation is the second monitoring mode.

In the above implementation, in a scenario where at least one of the number of PDCCH skipping durations configured by the BWP before the BWP switching being different from the number of PDCCH skipping durations configured by the BWP after the BWP switching, or the number of search space sets configured by the BWP before the BWP switching being different from the number of search space sets configured by the BWP after the BWP switching, the user equipment ignores the PAD received before the BWP switching. In this way, in a scenario where configurations before and after the BWP switching are different, the PDCCH monitoring may be performed based on the configuration of the BWP after the BWP switching, rather than based on the PAD received before the BWP switching.

An embodiment of the disclosure provides a method for channel monitoring, performed by a user equipment. The method may be executed independently, or may be executed in combination with any other embodiment of the embodiments of the present disclosure. The method includes:
receiving a first DCI; and
after bandwidth part (BWP) switching, in response to a number of PDCCH skipping durations configured by the BWP before the BWP switching being different from a number of PDCCH skipping durations configured by the BWP after the BWP switching, and/or a number of search space sets configured by the BWP before the BWP switching being different from a number of search space sets configured by the BWP after the BWP switching, performing the following actions:
   ignoring the PDCCH monitoring adaptation behavior indicated by the first DCI;
   in response to a BWP after the BWP switching being configured with a search space set group, monitoring a default search space set group, before receiving a second DCI; or
   in response to the BWP after the BWP switching being configured with no search space set group, monitoring a search space configured on the BWP after the BWP switching, before receiving the second DCI;
   stopping operation of a search space set group switching timer and/or a PDCCH skipping timer in response to presence of the search space set group switching timer and/or the PDCCH skipping timer in operation and associated to the BWP before the BWP switching;
   in which the first DCI includes information indicating the PDCCH monitoring adaptation behavior, and is received by the user equipment before the BWP switching, the second DCI includes information indicating the PDCCH monitoring adaptation behavior, and is received by the user equipment after the BWP switching.

In an implementation, the user equipment receives the PAD before the BWP switching, and after the BWP switching, in response to the number of the PDCCH skipping durations configured by the BWP before the BWP switching being different from the number of the PDCCH skipping durations configured by the BWP after the BWP switching, or the number of the search space set groups configured by the BWP before the BWP switching being different from the number of the search space set groups configured by the BWP after the BWP switching, or both the number of the PDCCH skipping durations and the number of the search space set groups configured by the BWP before the BWP switching being different from both the number of the PDCCH skipping durations and the number of the search space set groups configured by the BWP after the BWP switching, the following actions are performed: ignoring the PAD received before the BWP switching, that is, not performing the PDCCH monitoring adaptation behavior indicated by the PAD received before the BWP switching; or, in response to the BWP after the BWP switching being configured with the search space set group, monitoring the default search space set group, before receiving a PAD after the BWP switching. And the user equipment stops the operation of the search space set group switching timer and/or the PDCCH skipping timer in response to the presence of the search space set group switching timer and/or the PDCCH skipping timer in operation and associated to the BWP before the BWP switching.

In an implementation, the user equipment receives the PAD before the BWP switching, and after the BWP switching, in response to the number of the PDCCH skipping durations configured by the BWP before the BWP switching being different from the number of the PDCCH skipping durations configured by the BWP after the BWP switching, or the number of the search space set groups configured by the BWP before the BWP switching being different from the number of the search space set groups configured by the BWP after the BWP switching, or both the number of the PDCCH skipping durations and the number of the search space set groups configured by the BWP before the BWP switching being different from both the number of the PDCCH skipping durations and the number of the search space set groups configured by the BWP after the BWP switching, the following actions are performed: ignoring the PAD received before the BWP switching, that is, not performing the PDCCH monitoring adaptation behavior indicated by the PAD received before the BWP switching; or, in response to the BWP after the BWP switching being configured with no search space set group, monitoring the search space configured on the BWP after the BWP switching, before receiving a PAD after the BWP switching. And the user equipment stops the operation of the search space set group switching timer and/or the PDCCH skipping timer in response to the presence of the search space set group switching timer and/or the PDCCH skipping timer in operation and associated to the BWP before the BWP switching.

The PDCCH monitoring mode adopted by the user equipment in the foregoing implementation is the second monitoring mode.

In the above implementation, in a scenario where at least one of the number of PDCCH skipping durations configured by the BWP before the BWP switching being different from the number of PDCCH skipping durations configured by the BWP after the BWP switching, or the number of search space sets configured by the BWP before the BWP switching being different from the number of search space sets configured by the BWP after the BWP switching, the user equipment ignores the PAD received before the BWP switching. In this way, in a scenario where configurations before and after the BWP switching are different, the PDCCH monitoring may be performed based on the configuration of the BWP after the BWP switching, without based on the PAD received before the BWP switching, and without continuing the operation of the search space set group switching timer and/or the PDCCH skipping timer associated to the BWP before the BWP switching.

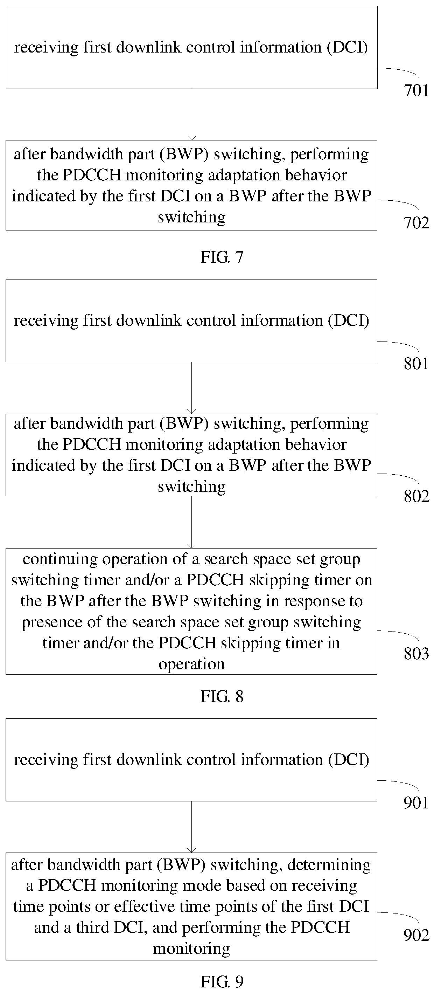

An embodiment of the disclosure provides a method for channel monitoring, performed by a user equipment. The method may be executed independently, or may be executed in combination with any other embodiment of the embodiments of the present disclosure. FIG. 7 is a flow chart illustrating a method for channel monitoring according to an exemplary embodiment. As shown in FIG. 7, the method may include the following steps.

At step 701, first DCI is received.

At step 702, after bandwidth part (BWP) switching, the PDCCH monitoring adaptation behavior indicated by the first DCI is performed on a BWP after the BWP switching.

The first DCI includes information indicating a PDCCH monitoring adaptation behavior, and is received by the user equipment before the BWP switching.

In an implementation, the user equipment receives the PAD before the BWP switching, and after the BWP switching, performs the PDCCH monitoring adaptation behavior indicated by the PAD received before the BWP switching on the BWP after the BWP switching.

The PDCCH monitoring mode adopted by the user equipment in the foregoing implementation is the third monitoring mode.

In the above implementation, after the BWP switching, the user equipment may continue to perform the PDCCH monitoring based on the PAD received before the BWP switching.

An embodiment of the disclosure provides a method for channel monitoring, performed by a user equipment. The method may be executed independently, or may be executed in combination with any other embodiment of the embodiments of the present disclosure. FIG. 8 is a flow chart illustrating a method for channel monitoring according to an exemplary embodiment. As shown in FIG. 8, the method may include the following steps.

At step 801, first DCI is received.

At step 802, after bandwidth part (BWP) switching, the PDCCH monitoring adaptation behavior indicated by the first DCI is performed on a BWP after the BWP switching.

At step 803, operation of a search space set group switching timer and/or a PDCCH skipping timer is continued on the BWP after the BWP switching in response to presence of the search space set group switching timer and/or the PDCCH skipping timer in operation.

The first DCI includes information indicating a PDCCH monitoring adaptation behavior, and is received by the user equipment before the BWP switching.

In an implementation, the user equipment receives the PAD before the BWP switching, and after the BWP switching, performs the PDCCH monitoring adaptation behavior indicated by the PAD received before the BWP switching on the BWP after the BWP switching, and continues the operation of the search space set group switching timer and/or the PDCCH skipping timer on the BWP after the BWP switching in response to the presence of the search space set group switching timer and/or the PDCCH skipping timer in operation. It should be noted that the search space set group switching timer and the PDCCH skipping timer in this scenario are not exclusively dedicated to any particular BWP, instead, a plurality of BWPs share the search space set group switching timer and the PDCCH skipping timer.

The PDCCH monitoring mode adopted by the user equipment in the foregoing implementation is the third monitoring mode.

In the above implementation, after the BWP switching, the user equipment may continue to perform the PDCCH monitoring based on the PAD received before the BWP switching, and continue to operate, on the BWP after the BWP switching, the search space set group switching timer and the PDCCH skipping timer operating on the BWP before the BWP switching.

An embodiment of the disclosure provides a method for channel monitoring, performed by a user equipment. The method may be executed independently, or may be executed in combination with any other embodiment of the embodiments of the present disclosure. FIG. 9 is a flow chart illustrating a method for channel monitoring according to an exemplary embodiment. As shown in FIG. 9, the method may include the following steps.

At step 901, first DCI is received.

At step 902, after bandwidth part (BWP) switching, a PDCCH monitoring mode is determined based on receiving time points or effective time points of the first DCI and a third DCI, and the PDCCH monitoring is performed.

The PDCCH monitoring mode is one of the first monitoring mode, the second monitoring mode and the third monitoring mode.

The first DCI includes information indicating a PDCCH monitoring adaptation behavior, and is received by the user equipment before the BWP switching. The third DCI includes information indicating the BWP switching. For example, the first DCI may be PAD, and the third DCI may be BSD. The monitoring mode can be selected according to transmitting time points of the PAD and the BSD and/or effective time points of the PAD and the BSD.

In an implementation, the user equipment receives the PAD before the BWP switching, and after the BWP switching, determines the PDCCH monitoring mode based on receiving time points of the received BSD and the PAD received before the BWP switching, and performs the PDCCH monitoring based on the PDCCH monitoring mode.

In an implementation, the user equipment receives the PAD before the BWP switching, and after the BWP switching, determines the PDCCH monitoring mode based on effective time points of the received BSD and the PAD received before the BWP switching, and performs the PDCCH monitoring based on the PDCCH monitoring mode.

The determined PDCCH monitoring mode in the foregoing implementation is one of the first monitoring mode, the second monitoring mode and the third monitoring mode.

The first monitoring mode, the second monitoring mode and the third monitoring mode have been described in detail in the foregoing embodiments, and will not be repeated here.

In the above implementation, the PDCCH monitoring mode is determined based on the receiving time points of the received BSD and the PAD received before the BWP switching, so that an appropriate PDCCH monitoring mode can be adopted based on the receiving time points of the received BSD and the PAD received before the BWP switching.

An embodiment of the disclosure provides a method for channel monitoring, performed by a user equipment. The method may be executed independently, or may be executed in combination with any other embodiment of the embodiments of the present disclosure. The method may include:
receiving first DCI; and
after bandwidth part (BWP) switching, in response to the receiving time point of the first DCI preceding the receiving time point of the third DCI, determining the PDCCH monitoring mode as the first monitoring mode or the second monitoring mode and performing the PDCCH monitoring.

The first DCI includes information indicating a PDCCH monitoring adaptation behavior, and is received by the user equipment before the BWP switching. The third DCI includes information indicating the BWP switching.

In an implementation, the user equipment receives the PAD before the BWP switching, and after the BWP switching, in response to a receiving time point of the PAD received before the BWP switching preceding a receiving time point of the received BSD, determines the PDCCH monitoring mode as the first monitoring mode and performs the PDCCH monitoring.

In an implementation, the user equipment receives the PAD before the BWP switching, and after the BWP switching, in response to the receiving time point of the PAD received before the BWP switching preceding the receiving time point of the received BSD, determines the PDCCH monitoring mode as the second monitoring mode and performs the PDCCH monitoring.

The first monitoring mode and the second monitoring mode have been described in detail in the foregoing embodiments, and will not be repeated here.

In the above implementation, the PDCCH monitoring mode is determined based on the receiving time points of the received BSD and the PAD received before the BWP switching, so that an appropriate PDCCH monitoring mode can be adopted based on the receiving time points of the received BSD and the PAD received before the BWP switching.

An embodiment of the disclosure provides a method for channel monitoring, performed by a user equipment. The method may be executed independently, or may be executed in combination with any other embodiment of the embodiments of the present disclosure. The method may include:
receiving first DCI; and
after bandwidth part (BWP) switching, in response to the receiving time point of the first DCI and the receiving time point of the third DCI being in a same PDCCH monitoring occasion, and the first DCI being different from the third DCI, determining the PDCCH monitoring mode as one of the first monitoring mode, the second monitoring mode, or the third monitoring mode, and performing the PDCCH monitoring;

The first DCI includes information indicating a PDCCH monitoring adaptation behavior, and is received by the user equipment before the BWP switching. The third DCI includes information indicating the BWP switching.

In an implementation, the user equipment receives the PAD before the BWP switching, and after the BWP switching, in response to a receiving time point of the PAD received before the BWP switching and a receiving time point of the received BSD being in the same PDCCH monitoring occasion, and the PAD is not a same DCI as the BSD, determines the PDCCH monitoring mode as the first monitoring mode and performs the PDCCH monitoring.

In an implementation, the user equipment receives the PAD before the BWP switching, and after the BWP switching, in response to the receiving time point of the PAD received before the BWP switching and the receiving time point of the received BSD being in the same PDCCH monitoring occasion, and the PAD is not a same DCI as the BSD, determines the PDCCH monitoring mode as the second monitoring mode and performs the PDCCH monitoring.

In an implementation, the user equipment receives the PAD before the BWP switching, and after the BWP switching, in response to the receiving time point of the PAD received before the BWP switching and the receiving time point of the received BSD being in the same PDCCH monitoring occasion, and the PAD is not a same DCI as the BSD, determines the PDCCH monitoring mode as the third monitoring mode and performs the PDCCH monitoring.

The first monitoring mode, the second monitoring mode and the third monitoring mode have been described in detail in the foregoing embodiments, and will not be repeated here.

In the above implementation, the PDCCH monitoring mode is determined based on the receiving time points of the received BSD and the PAD received before the BWP switching, so that an appropriate PDCCH monitoring mode can be adopted based on the receiving time points of the received BSD and the PAD received before the BWP switching.

An embodiment of the disclosure provides a method for channel monitoring, performed by a user equipment. The method may be executed independently, or may be executed in combination with any other embodiment of the embodiments of the present disclosure. The method may include:
receiving first DCI; and
after bandwidth part (BWP) switching, in response to the receiving time point of the first DCI and the receiving time point of the third DCI being in a same PDCCH monitoring occasion, and the first DCI being the same as the third DCI, determining the PDCCH monitoring mode as the third monitoring mode and performing the PDCCH monitoring;

The first DCI includes information indicating a PDCCH monitoring adaptation behavior, and is received by the user equipment before the BWP switching. The third DCI includes information indicating the BWP switching.

In an implementation, the user equipment receives the PAD before the BWP switching, and after the BWP switching, in response to a receiving time point of the PAD received before the BWP switching and a receiving time point of the received BSD being in the same PDCCH monitoring occasion, and the PAD is the same DCI as the BSD, determines the PDCCH monitoring mode as the third monitoring mode and performs the PDCCH monitoring.

It should be noted that in this scenario, a network device indicates the PDCCH monitoring adaptation behavior and the BWP switching in the same DCI, so the PDCCH monitoring adaptation behavior indicated by the network device in the DCI is based on the BWP switching indicated in the DCI. Therefore, the third monitoring more is suitable for this scenario.

The third monitoring mode have been described in detail in the foregoing embodiments, and will not be repeated here.

In the above implementation, the PDCCH monitoring mode is determined based on the receiving time points of the received BSD and the PAD received before the BWP switching, so that an appropriate PDCCH monitoring mode can be adopted based on the receiving time points of the received BSD and the PAD received before the BWP switching.

An embodiment of the disclosure provides a method for channel monitoring, performed by a user equipment. The method may be executed independently, or may be executed in combination with any other embodiment of the embodiments of the present disclosure. The method may include:
receiving first DCI; and
after bandwidth part (BWP) switching, in response to the receiving time point of the first DCI and the receiving time point of the third DCI being in a same PDCCH monitoring occasion, and the first DCI being the same as the third DCI, determining the PDCCH monitoring mode as the first monitoring mode or the second monitoring mode and performing the PDCCH monitoring;

The first DCI includes information indicating a PDCCH monitoring adaptation behavior, and is received by the user equipment before the BWP switching. The third DCI includes information indicating the BWP switching.

In an implementation, the user equipment receives the PAD before the BWP switching, and after the BWP switching, in response to a receiving time point of the PAD received before the BWP switching and a receiving time point of the received BSD being in the same PDCCH monitoring occasion, and the PAD is the same DCI as the BSD, determines the PDCCH monitoring mode as the first monitoring mode and performs the PDCCH monitoring.

In an implementation, the user equipment receives the PAD before the BWP switching, and after the BWP switching, in response to the receiving time point of the PAD received before the BWP switching and the receiving time point of the received BSD being in the same PDCCH monitoring occasion, and the PAD is the same DCI as the BSD, determines the PDCCH monitoring mode as the second monitoring mode and performs the PDCCH monitoring.

The first monitoring mode and the second monitoring mode have been described in detail in the foregoing embodiments, and will not be repeated here.

In the above implementation, the PDCCH monitoring mode is determined based on the receiving time points of the received BSD and the PAD received before the BWP switching, so that an appropriate PDCCH monitoring mode can be adopted based on the receiving time points of the received BSD and the PAD received before the BWP switching.

An embodiment of the disclosure provides a method for channel monitoring, performed by a user equipment. The method may be executed independently, or may be executed in combination with any other embodiment of the embodiments of the present disclosure. The method may include:
receiving first DCI; and
after bandwidth part (BWP) switching, in response to the effective time point of the first DCI preceding the effective time point of the third DCI, determining the PDCCH monitoring mode as the first monitoring mode or the second monitoring mode and performing the PDCCH monitoring.

The first DCI includes information indicating a PDCCH monitoring adaptation behavior, and is received by the user equipment before the BWP switching. The third DCI includes information indicating the BWP switching.

In an implementation, the user equipment receives the PAD before the BWP switching, and after the BWP switching, in response to an effective time point of the PAD received before the BWP switching preceding an effective time point of the received BSD, determines the PDCCH monitoring mode as the first monitoring mode, and performs the PDCCH monitoring.

In an implementation, the user equipment receives the PAD before the BWP switching, and after the BWP switching, in response to the effective time point of the PAD received before the BWP switching preceding the effective time point of the received BSD, determines the PDCCH monitoring mode as the second monitoring mode and performs the PDCCH monitoring.

The first monitoring mode and the second monitoring mode have been described in detail in the foregoing embodiments, and will not be repeated here.

In the above implementation, the PDCCH monitoring mode is determined based on the effective time points of the received BSD and the PAD received before the BWP switching, so that an appropriate PDCCH monitoring mode can be adopted based on the effective time points of the received BSD and the PAD received before the BWP switching.

An embodiment of the disclosure provides a method for channel monitoring, performed by a user equipment. The method may be executed independently, or may be executed in combination with any other embodiment of the embodiments of the present disclosure. The method may include:
receiving first DCI; and
after bandwidth part (BWP) switching, in response to the effective time point of the first DCI being the same as the effective time point of the third DCI, determining the PDCCH monitoring mode as one of the first monitoring mode, the second monitoring mode and the third monitoring mode and performing the PDCCH monitoring;

The first DCI includes information indicating a PDCCH monitoring adaptation behavior, and is received by the user equipment before the BWP switching. The third DCI includes information indicating the BWP switching.

In an implementation, the user equipment receives the PAD before the BWP switching, and after the BWP switching, in response to an effective time point of the PAD received before the BWP switching being the same as an effective time point of the received BSD, determines the PDCCH monitoring mode as the first monitoring mode and performs the PDCCH monitoring.

In an implementation, the user equipment receives the PAD before the BWP switching, and after the BWP switching, in response to the effective time point of the PAD received before the BWP switching being the same as the effective time point of the received BSD, determines the PDCCH monitoring mode as the second monitoring mode and performs the PDCCH monitoring.

In an implementation, the user equipment receives the PAD before the BWP switching, and after the BWP switching, in response to the effective time point of the PAD received before the BWP switching being the same as the effective time point of the received BSD, determines the PDCCH monitoring mode as the third monitoring mode and performs the PDCCH monitoring.

The first monitoring mode, the second monitoring mode and the third monitoring mode have been described in detail in the foregoing embodiments, and will not be repeated here.

In the above implementation, the PDCCH monitoring mode is determined based on the effective time points of the received BSD and the PAD received before the BWP switching, so that an appropriate PDCCH monitoring mode can be adopted based on the effective time points of the received BSD and the PAD received before the BWP switching.

An embodiment of the disclosure provides a method for channel monitoring, performed by a user equipment. The method may be executed independently, or may be executed in combination with any other embodiment of the embodiments of the present disclosure. The method may include:
receiving first DCI; and
after bandwidth part (BWP) switching, in response to the effective time point of the first DCI being after the effective time point of the third DCI, determining the PDCCH monitoring mode as one of the first monitoring mode, the second monitoring mode and the third monitoring mode and performing the PDCCH monitoring;

The first DCI includes information indicating a PDCCH monitoring adaptation behavior, and is received by the user equipment before the BWP switching. The third DCI includes information indicating the BWP switching.

In an implementation, the user equipment receives the PAD before the BWP switching, and after the BWP switching, in response to an effective time point of the PAD received before the BWP switching being after an effective time point of the received BSD, determines the PDCCH monitoring mode as the first monitoring mode and performs the PDCCH monitoring.

In an implementation, the user equipment receives the PAD before the BWP switching, and after the BWP switching, in response to the effective time point of the PAD received before the BWP switching being after the effective time point of the received BSD, determines the PDCCH monitoring mode as the second monitoring mode and performs the PDCCH monitoring.

In an implementation, the user equipment receives the PAD before the BWP switching, and after the BWP switching, in response to the effective time point of the PAD received before the BWP switching being after the effective time point of the received BSD, determines the PDCCH monitoring mode as the third monitoring mode and performs the PDCCH monitoring.

The first monitoring mode, the second monitoring mode and the third monitoring mode have been described in detail in the foregoing embodiments, and will not be repeated here.

In the above implementation, the PDCCH monitoring mode is determined based on the effective time points of the received BSD and the PAD received before the BWP switching, so that an appropriate PDCCH monitoring mode can be adopted based on the effective time points of the received BSD and the PAD received before the BWP switching.

An embodiment of the disclosure provides a method for channel monitoring, performed by a user equipment. The method may be executed independently, or may be executed in combination with any other embodiment of the embodiments of the present disclosure. The method may include:
receiving first DCI; and
after bandwidth part (BWP) switching, determining a PDCCH monitoring mode based on receiving time points or effective time points of the first DCI and the third DCI, and performing the PDCCH monitoring;
in which, the PDCCH monitoring mode is one of the first monitoring mode, the second monitoring mode and the third monitoring mode.

The first DCI includes information indicating a PDCCH monitoring adaptation behavior, and is received by the user equipment before the BWP switching. The third DCI includes information indicating the BWP switching.

The effective time point of the third DCI is a time point after a first offset following an end of a slot where the third DCI is located, or a time point after a second offset following an end of PDCCH symbols for transmitting the third DCI.

The first offset is greater than or equal to a BWP switching delay specified in a communication protocol, and the second offset is a sum of remaining symbols in the slot where the third DCI is located, after removing the PDCCH symbols for transmitting the third DCI, and the first offset.

In an implementation, the user equipment receives the PAD before the BWP switching, and after the BWP switching, determines the PDCCH monitoring mode based on receiving time points or effective time points of a received BSD and a PAD received before the BWP switching, and performs the PDCCH monitoring based on the PDCCH monitoring mode.

The PDCCH monitoring mode determined in the foregoing implementation is one of the first monitoring mode, the second monitoring mode and the third monitoring mode.

The first monitoring mode, the second monitoring mode and the third monitoring mode have been described in detail in the foregoing embodiments, and will not be repeated here.

In an implementation, the effective time point of the received BSD is a time point after a first offset following an end of a slot where the BSD is located, and the first offset is greater than or equal to a BWP switching delay specified in a communication protocol. In an implementation, the first offset is 3 or 4 slots. In an implementation, the first offset is a slot interval between a scheduled PDSCH and DCI indicated in the BSD.

In an implementation, the effective time point of the received BSD is a time point after a second offset following an end of PDCCH symbols for transmitting the BSD, and the second offset is a sum of remaining symbols in the slot where the BSD is located, after removing the PDCCH symbols for transmitting the BSD, and the first offset. In an implementation, one slot includes 14 symbols, the PDCCH symbols for transmitting the BSD are first three symbols of its slot, and the remaining symbols are 11 symbols, then the second offset is a sum of 11 symbols and the first offset.

In an implementation, the effective time point of the first DCI is specified by a communication protocol or by a high-level configuration.

In the above implementation, the PDCCH monitoring mode is determined based on the receiving time points of the received BSD and the PAD received before the BWP switching, so that an appropriate PDCCH monitoring mode can be adopted based on the receiving time points of the received BSD and the PAD received before the BWP switching.

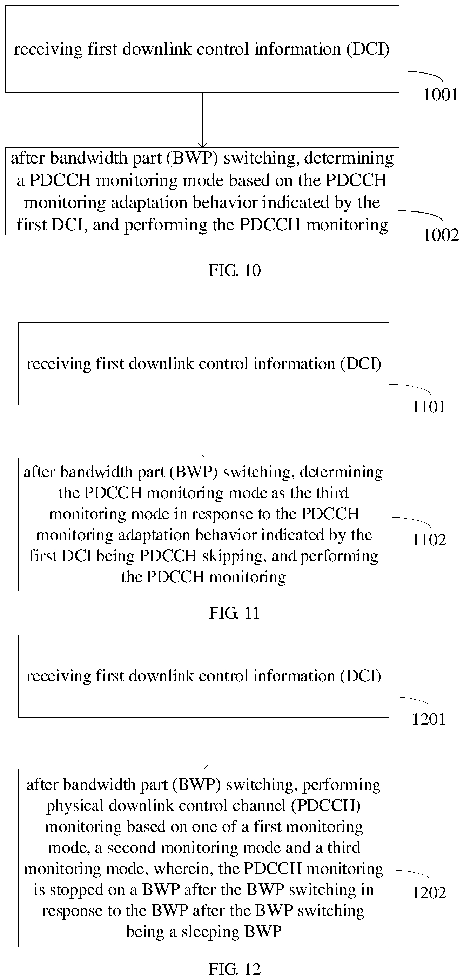

An embodiment of the disclosure provides a method for channel monitoring, performed by a user equipment. The method may be executed independently, or may be executed in combination with any other embodiment of the embodiments of the present disclosure. FIG. 10 is a flow chart illustrating a method for channel monitoring according to an exemplary embodiment. As shown in FIG. 10, the method may include the following steps.

At step 1001, first DCI is received.

At step 1002, after bandwidth part (BWP) switching, a PDCCH monitoring mode is determined based on the PDCCH monitoring adaptation behavior indicated by the first DCI, and the PDCCH monitoring is performed.

The PDCCH monitoring mode is one of the first monitoring mode, the second monitoring mode and the third monitoring mode.

The first DCI includes information indicating a PDCCH monitoring adaptation behavior, and is received by the user equipment before the BWP switching.

In an implementation, the user equipment receives a PAD before the BWP switching, and after the BWP switching, determines the PDCCH monitoring mode based on the PDCCH monitoring adaptation behavior indicated by the PAD received before the BWP switching, and performs the PDCCH monitoring.

The PDCCH monitoring mode determined in the foregoing implementation is one of the first monitoring mode, the second monitoring mode and the third monitoring mode.

The first monitoring mode, the second monitoring mode and the third monitoring mode have been described in detail in the foregoing embodiments, and will not be repeated here.

In the above implementation, an appropriate PDCCH monitoring mode can be adopted to perform the PDCCH monitoring based on the PDCCH monitoring adaptation behavior indicated by the PAD received before the BWP switching.

An embodiment of the disclosure provides a method for channel monitoring, performed by a user equipment. The method may be executed independently, or may be executed in combination with any other embodiment of the embodiments of the present disclosure. FIG. 11 is a flow chart illustrating a method for channel monitoring according to an exemplary embodiment. As shown in FIG. 11, the method may include the following steps.

At step 1101, first DCI is received.

At step 1102, after bandwidth part (BWP) switching, the PDCCH monitoring mode is determined as the third monitoring mode in response to the PDCCH monitoring adaptation behavior indicated by the first DCI being PDCCH skipping, and the PDCCH monitoring is performed.

The first DCI includes information indicating a PDCCH monitoring adaptation behavior, and is received by the user equipment before the BWP switching.

In an implementation, the user equipment receives a PAD before the BWP switching, and after the BWP switching, in response to the PDCCH monitoring adaptation behavior indicated by the PAD received before the BWP switching being the PDCCH skipping, determines the PDCCH monitoring mode as the third monitoring mode, and performs the PDCCH monitoring.

The third monitoring mode have been described in detail in the foregoing embodiments, and will not be repeated here.

In the above implementation, the third monitoring mode can be adopted to perform the PDCCH monitoring in a scenario where the PDCCH monitoring adaptation behavior indicated by the PAD received before the BWP switching is the PDCCH skipping.

An embodiment of the disclosure provides a method for channel monitoring, performed by a user equipment. The method may be executed independently, or may be executed in combination with any other embodiment of the embodiments of the present disclosure. FIG. 12 is a flow chart illustrating a method for channel monitoring according to an exemplary embodiment. As shown in FIG. 12, the method may include the following steps.

At step 1201, first DCI is received.

At step 1202, after bandwidth part (BWP) switching, physical downlink control channel (PDCCH) monitoring is performed based on one of a first monitoring mode, a second monitoring mode and a third monitoring mode, in which the PDCCH monitoring is stopped on a BWP after the BWP switching in response to the BWP after the BWP switching being a sleeping BWP.

In an implementation, the user equipment receives a PAD before the BWP switching, and after the BWP switching, in a scenario where the BWP after the BWP switching is the sleeping BWP, the PDCCH monitoring is stopped on the BWP after the BWP switching.

In an implementation, the user equipment receives a PAD before the BWP switching, and after the BWP switching, in a scenario where the BWP after the BWP switching is not the sleeping BWP, the physical downlink control channel (PDCCH) monitoring is performed based on one of the first monitoring mode, the second monitoring mode and the third monitoring mode.

The first monitoring mode, the second monitoring mode and the third monitoring mode have been described in detail in the foregoing embodiments, and will not be repeated here.

In the above implementation, the PDCCH monitoring is stopped on the BWP after the BWP switching when the BWP after the BWP switching is the sleeping BWP.

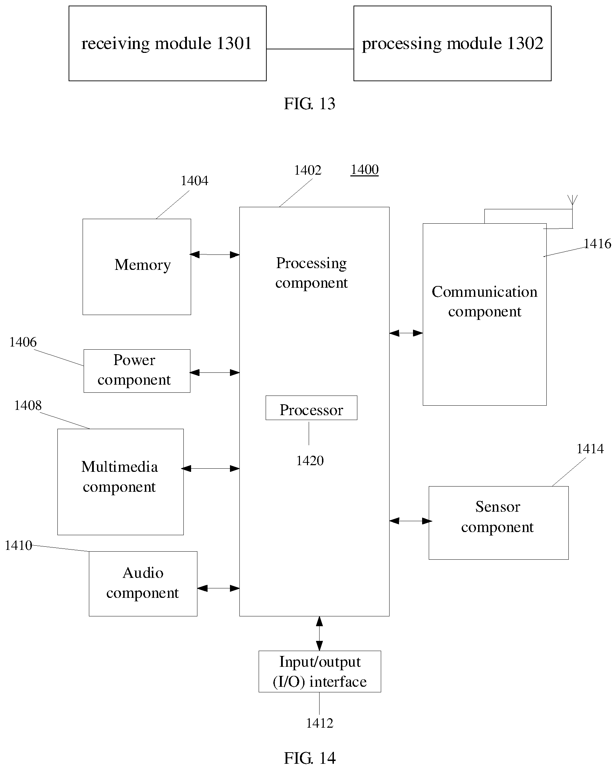

An embodiment of the disclosure provides an apparatus for channel monitoring, applied to a user equipment. As illustrated in FIG. 13, the apparatus includes:
a receiving module 1301, configured to receive first downlink control information (DCI); and
a processing module 1302, configured to, after bandwidth part (BWP) switching, perform physical downlink control channel (PDCCH) monitoring based on one of a first monitoring mode, a second monitoring mode and a third monitoring mode;
in which the first DCI includes information indicating a PDCCH monitoring adaptation behavior, and is received by the user equipment before the BWP switching.

In some embodiments, the receiving module and the processing module of the apparatus for channel monitoring shown in FIG. 13 can be used to perform the steps of any one of the above methods for channel monitoring.

An embodiment of the disclosure provides a mobile terminal. The mobile terminal includes:
a processor;
a memory for storing processor-executable instructions;
in which, the processor is configured to execute the executable instructions in the memory to implement steps of the above method for channel monitoring.

An embodiment of the disclosure provides a non-transitory computer-readable storage medium with executable instructions stored thereon, in which, when the executable instructions are executed by a processor, steps of the above method for channel monitoring are implemented.

FIG. 14 is a block diagram illustrating an apparatus 1400 for channel monitoring according to an exemplary embodiment. For example, the apparatus 1400 may be a mobile phone, a computer, a digital broadcasting terminal, a message transceiving equipment, a game console, a tablet equipment, a medical equipment, a fitness equipment, or a personal digital assistant, etc.

As illustrated in FIG. 14, the apparatus 1400 may include one or more of: a processing component 1402, a memory 1404, a power component 1406, a multimedia component 1408, an audio component 1410, an input/output (I/O) interface 1412, a sensor component 1414, and a communication component 1416.

The processing component 1402 typically controls overall operations of the apparatus 1400, such as the operations associated with display, telephone calls, data communications, camera operations, and recording operations. The processing component 1402 may include one or more processors 1402 for executing instructions to implement all or a part of the above method. Moreover, the processing component 1402 may include one or more modules which facilitate the interaction between the processing component 1402 and other components. For example, the processing component 1402 may include a multimedia module to facilitate the interaction between the multimedia component 1408 and the processing component 1402.

The memory 1404 is configured to store various types of data to support the operation of the apparatus 1400. Examples of such data include instructions for any application or method operated on the apparatus 1400 for performing contraction data, phonebook data, messages, pictures, video, etc. The memory 1404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or an optical disk.

The power component 1406 is configured to provide power to various components of the apparatus 1400. The power component 1406 may include a power management system, one or more power sources, and any other components associated with the generation, management, and distribution of power in the apparatus 1400.

The multimedia component 1408 includes a screen providing an output interface between the apparatus 1400 and the user. In some embodiments, the screen may include a liquid crystal display (LCD) and a touch panel (TP). If the screen includes the touch panel, the screen may be implemented as a touch screen to receive an input signal from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 1408 includes a front camera and/or a rear camera. When the apparatus 1400 is in an operation mode, such as a shooting mode or a video mode, the front camera and/or the rear camera may receive external multimedia data. Each front camera and rear camera may be a fixed optical lens system or have a focal length and an optical zoom capability.

The audio component 1410 is configured to output and/or input an audio signal. For example, the audio component 1410 includes a microphone ("MIC") for receiving an external audio signal when the apparatus 1400 is in an operation mode, such as a call mode, a recording mode, and a voice recognition mode. The received audio signal may be further stored in the memory 1404 or transmitted via the communication component 1416. In some embodiments, the audio component 1410 further includes a speaker for outputting the audio signal.

The I/O interface 1412 is configured to provide an interface between the processing component 1402 and peripheral interface modules, such as a keyboard, a click wheel, buttons, and the like. These buttons may include, but be not limited to, a home button, a volume button, a start button, and a lock button.

The sensor component 1414 includes one or more sensors for providing status assessments of various aspects of the apparatus 1400. For example, the sensor component 1414 may detect an open/closed state of the apparatus 1400, relative positioning of components, e.g., the display and the keypad of the apparatus 1400, a position change of the apparatus 1400 or a component of the apparatus 1400, a presence or absence of user contraction with the apparatus 1400, an orientation or an acceleration/deceleration of the apparatus 1400, and a temperature change of the apparatus 1400. The sensor component 1414 1414 may include a proximity sensor configured to detect the presence of nearby objects without any physical contact. The sensor component 1414 may also include an optical sensor, such as a CMOS or CCD image sensor, for use in an imaging application. In some embodiments, the sensor component 1414 may also include an acceleration sensor, a gyro sensor, a magnetic sensor, a pressure sensor or a temperature sensor.

The communication component 1416 is configured to facilitate communication, wired or wirelessly, between the apparatus 1400 and other devices. The apparatus 1400 may access a wireless network based on a communication standard, such as Wi-Fi, 2G, 3G, or a combination thereof. In an exemplary embodiment, the communication component 1416 receives a broadcast signal or broadcast associated information from an external broadcast management system via a broadcast channel. In an exemplary embodiment, the communication component 1416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In one or more exemplary embodiments, the apparatus 1400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In exemplary embodiments, there is also provided a non-transitory computer readable storage medium including instructions, such as the memory 1404 including the instructions. The instructions may be executed by the processor 1420 in the apparatus 1400 for performing the above method. For example, the non-transitory computer readable storage medium may be a ROM, a RAM, a CD-ROM, a magnetic tape, a floppy disc, an optical data storage device, and the like.

Other implementations of the disclosure will be apparent to the skilled in the art from consideration of the specification and practice of the disclosure disclosed here. This disclosure is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It should be understood that the disclosure is not limited to the exaction construction that has been described above and illustrated in the accompanying drawings, and that various modifications and changes may be made without departing from the scope thereof. The scope of the disclosure only be limited by the appended claims.

### Industrial Applicability

With the method of the present disclosure, the user equipment may determine whether to perform the PDCCH monitoring based on the PAD (PDCCH adaptation DCI) received before the BWP switching based on different monitoring modes, thereby solving a problem of which method the user equipment uses to monitor the PDCCH after the BWP switching.

## Claims

1. A method for channel monitoring, performed by a user equipment, and comprising:
receiving first downlink control information (DCI); and
after bandwidth part (BWP) switching, performing physical downlink control channel (PDCCH) monitoring based on one of a first monitoring mode, a second monitoring mode and a third monitoring mode;
wherein the first DCI comprises information indicating a PDCCH monitoring adaptation behavior, and is received by the user equipment before the BWP switching.

2. The method according to claim 1, wherein performing the PDCCH monitoring based on the first monitoring mode comprises:
ignoring the PDCCH monitoring adaptation behavior indicated by the first DCI.

3. The method according to claim 2, wherein performing the PDCCH monitoring based on the first monitoring mode further comprises:
stopping operation of a search space set group switching timer and/or a PDCCH skipping timer in response to presence of the search space set group switching timer and/or the PDCCH skipping timer in operation and associated to a BWP before the BWP switching.

4. The method according to claim 1, wherein performing the PDCCH monitoring based on the first monitoring mode comprises:
in response to a BWP after the BWP switching being configured with a search space set group, monitoring a default search space set group, before receiving a second DCI; or
in response to the BWP after the BWP switching being configured with no search space set group, monitoring a search space configured on the BWP after the BWP switching, before receiving the second DCI;
wherein the second DCI comprises information indicating the PDCCH monitoring adaptation behavior, and is received by the user equipment after the BWP switching.

5. The method of claim 4, wherein the default search space set group is specified by a communication protocol.

6. The method according to claim 1, wherein performing the PDCCH monitoring based on the second monitoring mode comprises:
in response to a number of PDCCH skipping durations configured by the BWP before the BWP switching being the same as a number of PDCCH skipping durations configured by the BWP after the BWP switching, and a number of search space sets configured by the BWP before the BWP switching being the same as a number of search space sets configured by the BWP after the BWP switching, performing the PDCCH monitoring adaptation behavior indicated by the first DCI.

7. The method according to claim 6, wherein performing the PDCCH monitoring based on the second monitoring mode further comprises:
continuing operation of a search space set group switching timer and/or a PDCCH skipping timer on the BWP after the BWP switching in response to presence of the search space set group switching timer and/or the PDCCH skipping timer in operation and associated to a BWP before the BWP switching.

8. The method according to claim 1, wherein performing the PDCCH monitoring based on the second monitoring mode comprises:
in response to a number of PDCCH skipping durations configured by the BWP before the BWP switching being different from a number of PDCCH skipping durations configured by the BWP after the BWP switching, and/or a number of search space sets configured by the BWP before the BWP switching being different from a number of search space sets configured by the BWP after the BWP switching, performing the following actions:
ignoring the PDCCH monitoring adaptation behavior indicated by the first DCI;
in response to a BWP after the BWP switching being configured with a search space set group, monitoring a default search space set group, before receiving a second DCI; or
in response to the BWP after the BWP switching being configured with no search space set group, monitoring a search space configured on the BWP after the BWP switching, before receiving the second DCI;
wherein the second DCI comprises information indicating the PDCCH monitoring adaptation behavior, and is received by the user equipment after the BWP switching.

9. The method according to claim 8, wherein performing the PDCCH monitoring based on the second monitoring mode further comprises:
stopping operation of a search space set group switching timer and/or a PDCCH skipping timer in response to presence of the search space set group switching timer and/or the PDCCH skipping timer in operation and associated to the BWP before the BWP switching.

10. The method according to claim 1, wherein performing the PDCCH monitoring based on the third monitoring mode comprises:
performing the PDCCH monitoring adaptation behavior indicated by the first DCI on a BWP after the BWP switching.

11. The method according to claim 10, wherein performing the PDCCH monitoring based on the third monitoring mode further comprises:
continuing operation of a search space set group switching timer and/or a PDCCH skipping timer on the BWP after the BWP switching in response to presence of the search space set group switching timer and/or the PDCCH skipping timer in operation.

12. The method according to claim 1, wherein performing the PDCCH monitoring based on one of the first monitoring mode, the second monitoring mode and the third monitoring mode comprises:
determining a PDCCH monitoring mode based on receiving time points or effective time points of the first DCI and a third DCI, and performing the PDCCH monitoring;
wherein the PDCCH monitoring mode is one of the first monitoring mode, the second monitoring mode and the third monitoring mode;
the third DCI comprises information indicating the BWP switching.

13. The method according to claim 12, wherein determining the PDCCH monitoring mode based on the receiving time points of the first DCI and the third DCI comprises:
determining the PDCCH monitoring mode as the first monitoring mode or the second monitoring mode in response to the receiving time point of the first DCI preceding the receiving time point of the third DCI.

14. The method according to claim 12, wherein determining the PDCCH monitoring mode based on the receiving time points of the first DCI and the third DCI comprises:
determining the PDCCH monitoring mode as one of the first monitoring mode, the second monitoring mode and the third monitoring mode in response to the receiving time point of the first DCI and the receiving time point of the third DCI being in a same PDCCH monitoring occasion, and the first DCI being different from the third DCI.

15. The method according to claim 12, wherein determining the PDCCH monitoring mode based on the receiving time points of the first DCI and the third DCI comprises:
determining the PDCCH monitoring mode as the third monitoring mode in response to the receiving time point of the first DCI and the receiving time point of the third DCI being in a same PDCCH monitoring occasion, and the first DCI being the same as the third DCI.

16. The method according to claim 12, wherein determining the PDCCH monitoring mode based on the receiving time points of the first DCI and the third DCI comprises:
determining the PDCCH monitoring mode as the first monitoring mode or the second monitoring mode in response to the receiving time point of the first DCI and the receiving time point of the third DCI being in a same PDCCH monitoring occasion, and the first DCI being the same as the third DCI.

17. The method according to claim 12, wherein determining the PDCCH monitoring mode based on the effective time points of the first DCI and the third DCI comprises:
determining the PDCCH monitoring mode as the first monitoring mode or the second monitoring mode in response to the effective time point of the first DCI preceding the effective time point of the third DCI.

18. The method according to claim 12, wherein determining the PDCCH monitoring mode based on the effective time points of the first DCI and the third DCI comprises:
determining the PDCCH monitoring mode as one of the first monitoring mode, the second monitoring mode and the third monitoring mode in response to the effective time point of the first DCI being the same as the effective time point of the third DCI.

19. The method according to claim 12, wherein determining the PDCCH monitoring mode based on the effective time points of the first DCI and the third DCI comprises:
determining the PDCCH monitoring mode as one of the first monitoring mode, the second monitoring mode and the third monitoring mode in response to the effective time point of the first DCI being after the effective time point of the third DCI.

20. The method according to claim 12, wherein the effective time point of the third DCI is a time point after a first offset following an end of a slot where the third DCI is located, or a time point after a second offset following an end of PDCCH symbols for transmitting the third DCI;
wherein the first offset is greater than or equal to a BWP switching delay specified in a communication protocol, and the second offset is a sum of remaining symbols in the slot where the third DCI is located, after removing the PDCCH symbols for transmitting the third DCI, and the first offset.

21. The method according to claim 12, wherein the effective time point of the first DCI is specified by a communication protocol or by a high-level configuration.

22. The method according to claim 1, wherein performing the PDCCH monitoring based on one of the first monitoring mode, the second monitoring mode and the third monitoring mode comprises:
determining a PDCCH monitoring mode based on the PDCCH monitoring adaptation behavior indicated by the first DCI, and performing the PDCCH monitoring;
wherein the PDCCH monitoring mode is one of the first monitoring mode, the second monitoring mode and the third monitoring mode.

23. The method according to claim 22, wherein determining the PDCCH monitoring mode based on the PDCCH monitoring adaptation behavior indicated by the first DCI comprises:
determining the PDCCH monitoring mode as the third monitoring mode in response to the PDCCH monitoring adaptation behavior indicated by the first DCI being PDCCH skipping.

24. The method of claim 1, further comprising:
stopping the PDCCH monitoring on a BWP after the BWP switching in response to the BWP after the BWP switching being a sleeping BWP.

25. An apparatus for channel monitoring, applied to a user equipment, comprising:
a receiving module configured to receive first downlink control information (DCI); and
a processing module, configured to, after bandwidth part (BWP) switching, perform physical downlink control channel (PDCCH) monitoring based on one of a first monitoring mode, a second monitoring mode and a third monitoring mode;
wherein the first DCI comprises information indicating a PDCCH monitoring adaptation behavior, and is received by the user equipment before the BWP switching.

26. A mobile terminal, comprising:
a processor;
a memory for storing processor-executable instructions;
wherein the processor is configured to execute the executable instructions in the memory to implement steps of the method for channel monitoring according to any one of claims 1 to 24.

27. A non-transitory computer-readable storage medium with executable instructions stored thereon, wherein, when the executable instructions are executed by a processor, steps of the method for channel monitoring according to any one of claims 1 to 24 are implemented.
